# EUROPÄISCHE PATENTANMELDUNG

(11) **EP 0 587 016 A1**
(43) Veröffentlichungstag der Anmeldung: **16.03.1994**
(21) Anmeldenummer: 93113880.4
(22) Anmeldetag: 31.08.1993
(51) Int. Cl.: A01G 1/04

(54) **Herstellverfahren und Mischvorrichtung für Brutmaterial**

(30) Priorität: 09.09.1992 CH 2840/92
(71) Anmelder: SYLVAN PILZ AG, CH-8625 Gossau-Zürich (CH)
(72) Erfinder: Stadelmann,René J., Dr., CH-8617 Mönchaltorf (CH); Fontana, Franco, CH-8957 Spreitenbach (CH)
(74) Vertreter: Fillinger, Peter, Dr.

(57) **Zusammenfassung**

Die neue Erfindung betrifft ein Verfahren sowie eine Vorrichtung zur Herstellung von inoculiertem Brutmaterial insbesondere für die Pilzzucht. Dazu wird vorgeschlagen, nach einer vorgängigen Aufquellung des Nährsubstrates zum Beispiel Roggenkörner mit einem Wassergehalt von 40 bis 60 % und einer Sterilisation, für die Inoculierung zwei Prozessräume (3, 3') beziehungsweise Mischer (1', 76) derart vorzusehen. Der Ort der Inoculierung kann gewählt werden zum Beispiel für grosse Mengen, direkt in dem ersten Prozessraum (3) beziehungsweise Mischer 1', und für kleinere Mengen in dem zweiten, kleineren Prozessraum 3' beziehungsweise Mischer 76. Auf diese Weise lässt sich auch das Impfmaterial (Inoc III, IV) für den ersten Prozessraum 3 in dem zweiten Prozessraum (3') wirtschaftlicher herstellen.

## Beschreibung

Die Erfindung betrifft ein Verfahren sowie eine Misch-Vorrichtung gemäss den Oberbegriffen der Ansprüche 1 und 5.

Das Brutmaterial zum Beispiel für eine Speisepilzzucht darf mit keinen störenden Organismen, Mikroorganismen oder deren Sporen infiziert sein, damit erfolgreich Speisepilze gezüchtet werden können. Als Nährsubstrat werden fast ausschliesslich Fruchtkörper von Pflanzen beziehungsweise Pflanzensamen, bevorzugt Getreidekörner, verwendet. Gleichzeitig mit der Aufbereitung des Nährsubstrates muss deshalb die Keimfähigkeit solcher Samen ausgeschaltet werden, damit nicht der Pflanzen-Keimling des Getreidekornes in Konkurrenz zu dem Pilzmyzel für den Abbau der Nährstoffe des Kornes treten. Sehr stark verbreitet ist die Verwendung von Roggen oder Hirse als Basisnährsubstrat. Der angestrebte Wassergehalt liegt im Falle der Produktion von Brutmaterial für Champignon-, Kultur- und Speisepilze je nach Sorte bei 40 bis 50 %.

In der US-PS Nr. 2 932 862 ist das zur Zeit das fortschrittlichste Verfahren zur industriellen Herstellung von Brutmaterial für die Speisepilzzucht beschrieben.

Gemäss dieser Druckschrift wird das Nährstoffgemisch bei einer Temperatur von mindestens 122°C während 35 bis 120 Minuten sterilisiert. Dies geschieht unter Anwendung von Kochwasser und Heissluft beziehungsweise Heissdampf unter Druck in einem V-förmigen Trommelmischer. Anschliessend wird das sterile und aufgequollene Korngut abgekühlt und bildet das Nährsubstrat. Zur- Vermeidung von jeglicher Infizierung mit externen Fremdkeimen wird dieses im selben Trommelmischer geimpft und anschliessend in Brutsäcke oder Inkubationsbehälter abgefüllt. Der eigentliche Nachteil des oben erwähnten Herstellverfahrens liegt darin, dass im Gegensatz zu der Laborherstellung hier, vor allem wegen der Dampfsterilisation, die zu produzierende Batch-Menge in einem definierten Verhältnis zum Mischer-Innenvolumen stehen muss und nicht beliebig variierbar ist. Zudem rechtfertigen sich die Investitionen für solche komplexen Anlagen und Installationen fast nur für grosse Mischer und somit für grosse Batch-Mengen (2t - 5t oder mehr). Kleine Mengen von Brutmaterial, sei es als Handelsware oder zur Verwendung als Impfmittel in der eigenen Brutmaterialfabrikation, sind wirtschaftlich auf diese Weise nicht herstellbar.

Der Erfindung lag die Aufgabe zugrunde, die Nachteile der bekannten Lösungen zu beseitigen, es sollen insbesondere sowohl grosse wie kleine Mengen an Brutmaterial wirtschaftlich herstellbar sein.

Das erfindungsgemässe Verfahren zur Lösung dieser Aufgabe ist dadurch gekennzeichnet, dass die Inoculierung wählbar, entweder in einem ersten Prozessraum, oder in einem, über eine verschliessbare Produktüberführung verbindbaren, vorzugsweise kleineren, zweiten Prozessraum durchgeführt wird. Die Erfinder erkannten, dass bei der Herstellung von Brutmaterial vorteilhaft der Hauptteil aller Installations- und Betriebskosten für die sterile Vorbereitung des Nährsubstrates einzusetzen sind, und dass die eigentliche Inoculierung an sich im Grunde genommen einen ganz einfachen - unter sterilen Bedingungen ablaufenden - Mischprozess darstellt. Durch die mögliche Loslösung der Inoculierung von dem vorangegangenen Prozess insbesondere mit der Möglichkeit der Schaffung einer zweiten Mischmöglichkeit, können überraschenderweise kleinste bis zu sehr grossen Mengen an Brutmaterial auf der gleichen Anlage wirtschaftlich hergestellt werden, was eine flexible, kundengerichtete Produktion erlaubt (Just-In-Time-Fertigung) und die aufwendige Inoc-Laborproduktion zum grössten Teil erspart. Dies gestattet zudem mehrere, besonders vorteilhafte Verfahren. So wird vorgeschlagen, dass in dem zweiten Prozessraum, der als Mischer ausgebildet ist, im Durchlauf- oder im Batschbetrieb inoculiert wird, insbesondere zur Herstellung von Kleinmengen beziehungsweise Kleinchargen. Gemäss einem weiteren Ausgestaltungsgedanken wird in dem zweiten Prozessraum Inoculum für die Inoculierung des Nährsubstrates in dem ersten Prozessraum hergestellt. Es ist aber ferner auch möglich, dass in dem zweiten Prozessraum, in vorzugsweise zwei Durchläufen, aus kleinen Labormengen eines Impfmittels (Inoc II) grössere Mengen für die Brutmaterialfabrikation herzustellen (Inoc III und IV).

Die Erfindung betrifft ferner eine Misch-Vorrichtung zur Herstellung von Brutmaterial und ist dadurch gekennzeichnet, dass sie zwei durch eine Produktüberführung verbindbare Mischer mit je einem unabhängigen Inoculum-Anschluss sowie Steuermittel aufweist, zur wahlweisen Inoculierung in dem ersten und/oder zweiten Mischer. Bevorzugt wird zwischen den beiden Mischern ein Zwischenspeicher angeordnet. Der erste Mischer kann in Kombination mit einer Aufquell- und Sterilisiereinheit verwendet werden, wobei das Volumen des ersten Mischers bevorzugt fünf bis zehn Mal grösser ist, als das des zweiten Mischers.

Für eine ganz grosse Anlage kann der zweite Mischer als Batchmischer ausgebildet werden und einen Doppelmantel für die Erwärmung und Kühlung sowie Anschlüsse für Haft- und/oder Wachstumsförderstoffe, wie Mischfettsäuren und Puder für das Coaten des Nährsubstrates aufweisen. Besonders bevorzugt ist der erste und der zweite Mischer gemeinsam der selben Abfülleinrichtung zugeordnet.

In der Folge wird nun die Erfindung an Hand mehrerer Beispiele erläutert. Es zeigen:
- die Figur 1: ein Schema einer vollständigen Anlage für die Herstellung grosser und kleiner Chargen von Brutmaterial für die Pilzzucht mit einem ersten sowie einem zweiten Mischer;
- die Figur 2: den zweiten Mischer (Detail A aus der Figur 1) als kontinuierlichen Mischer für Keinmengen;
- die Figur 3: eine andere Ausgestaltung einer Anlage wobei der zweite Mischer als Batchmischer ausgebildet ist.

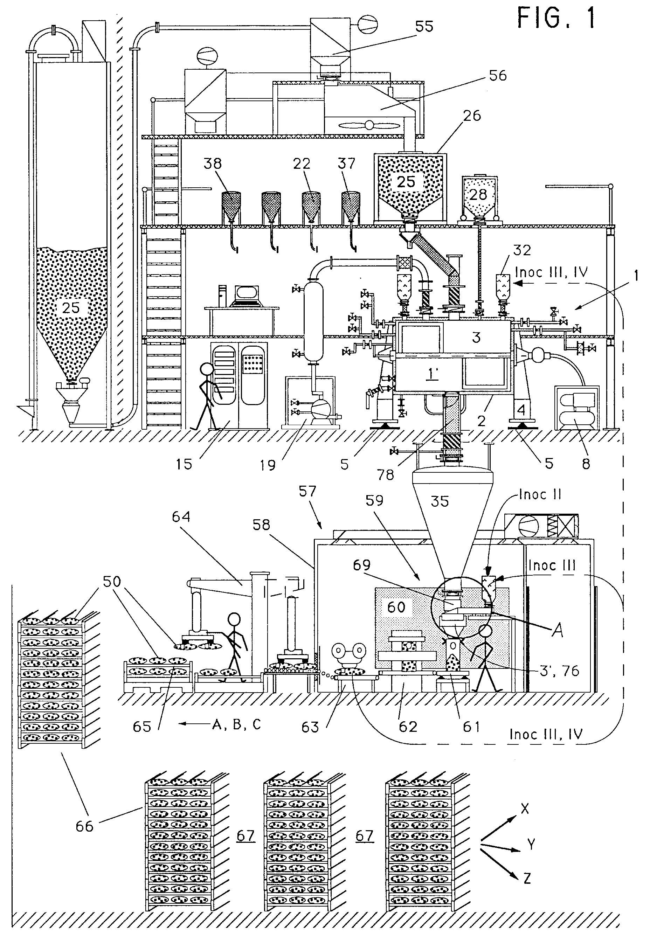

In der Folge wird nun auf die Figur 1 Bezug genommen, deren zentraler Teil eine Aufquell- und Sterilisiereinheit 1 ist. Diese weist einen, nach aussen vollständig abschliessbaren Mantel 2 auf, der einen ersten Prozessraum 3 umfasst und über Konsolen 4 auf Wägezellen 5 abgestützt ist. Im Inneren des ersten Prozessraumes 3 befinden sich an einer horizontalen Hohlwelle, hohle Rührarme, welche über ein schematisch dargestelltes Hydraulikgetriebe 8 in Umlauf versetzbar ist und einen Mischer 1' darstellt. Der Mantel 2 ist als Hohlmantel ausgebildet und zusammen mit der Hohlwelle und den hohlen Rührarmen an eine Temperatursteuerung angeschlossen, so dass je nach Bedarf über steuerbare Absperrelemente, Kühl- oder Heizmedien in Hohlmantel beziehungsweise in die Hohlwelle und Rührarme eingelassen und über einen weiteren ebenfalls steuerbaren Auslass wieder abgeführt werden können. Zur periodischen Reinigung des ersten Prozessraumes 3, insbesondere zur Entfernung von Ablagerungen lässt sich aus einem Reinigungskreislauf wahlweise Reinigungslösung über einen Schieber und Heisswasser über einen Heisswasserschieber einfüllen, wobei alle Steuereingriffe, auch die in der Folge beschriebenen, über eine zentrale Steuerung 15 kontrolliert und gesteuert werden können. Im ersten Prozessraum 3 befindliches flüssiges Medium lässt sich über einen Bodenauslass und gasförmiges Medium über eine Aspiration ableiten, wobei wahlweise ein Abluftsystem und/oder eine Vakuumanlage 19 anschliessbar ist.

Damit die in den Behandlungsraum 3 der Aufquell- und Sterilisiereinheit 1 eingegebenen Medien tatsächlich darin gewogen werden können, müssen alle festen Anschlüsse nach aussen über flexible Rohre respektiv flexible Schläuche mit dem Mantel 2 verbunden sein. Zumindest die grossquerschnittigen Zu- und Abführungen weisen im Nahbereich des Mantels 2 eine Schleuse beziehungsweise einen Drehschieber auf, welche mit einem Sterilisations- und Reinigungssystem mit Sprühdüsen versehen sind, so dass periodisch auch die entsprechenden sonst schlecht zugänglichen Räume rasch und automatisch keimfrei reinigbar sind.

Geeignetes Desinfektionsmittel 22 sowie Reinigungsmittel 37 können von Tauschkontainern über verschliessbare Hahnen eines Desinfektionskreislaufes in den ersten Prozessraum 3 gespritzt werden. Nach dem Abführen des Desinfektionsmittels kann zur Vervollständigung der Sterilisation des Behandlungsraumes 3 und der übrigen Infrastruktur (Schieber, Schleusen und dgl.) Dampf über einen Dampfschieber und Sterilluft über einen Sterilluftschieber eingefüllt werden. Die Aufquell- und Sterilisiereinheit 1 kann auch aus zwei parallelen Einheiten in Einzel- oder Zwillingsbauweise konzipiert sein, und/oder gleichzeitig als Mischer 1' konzipiert sein.

Als Ausgangskornmaterial 25 für das Nährsubstrat sind bei einer Anlage nach Figur 1 gereinigte und sortierte Roggenkörner vorgesehen, welche über eine Reinigungseinrichtung 56 chargenweise bereitstellbar sind. Der Bruchkorn- beziehungsweise Gesamt-Besatzanteil ist kleiner als 3 % beziehungsweise 5 %. Die Körner fliessen unter der Schwerkraft über eine regelbare Dosierklappe, einen flexiblen Verbindungsschlauch und einen Kornzuführstutzen in den ersten Prozessraum 3. Die Dosiermenge wird über entsprechende Gewichtssignale von den Wägezellen 5 über die Steuerung 15 bestimmt. Der für das Beschichten der Körner benötigte Kalkpuder 28 ist in einem Puderbehälter bereitgestellt und wird über eine ebenfalls absperrbare Verbindungsleitung in den ersten Prozessraum 3 geleitet. Dieser Vorgang lässt sich zum Beispiel durch einen im ersten Prozessraum 3 durch die Vakuumanlage 19 erzeugten Unterdruck unterstützen. Zusätzliche Präparate können ebenfalls eingeführt werden. Beispielsweise kann vor der Puderzugabe Fettsäure 38 aus einem verschliessbaren Behälter eingeführt und damit zusätzlich die Nährwerte des Nährsubstrates für das Myzel verbessert und eine die einzelnen Körner überziehende Haftschicht für den Puder und ein optimales Mengenverhältnis von Fettsäure zu Puder hinsichtlich des pH-Wertes erreicht werden. Neben dem Ausgangskornmaterial 25, dem Aufquell- und, Sterilisationswasser und dem Puder 28 ist die eigentliche Impfmasse respektiv das Inoculum, welches in Inocbomben 32 bereitgestellt ist, die Hauptkomponente, die mit dem Ausgangskornmaterial vermischt werden soll. Das Inoculum besteht aus Brutmaterial beziehungsweise Körnern, die vollständig mit dem Myzel bewachsen sind. Das Beimischen des Inoculums kann, wie in der Figur 1 dargestellt ist, direkt aus einer Inocbombe 32 in den Prozessraum beziehungsweise Mischer 1' erfolgen. Da sowohl für das Aufquellen wie für das Sterilisieren in engen Grenzen festlegbare Parameter wie Zeit, Temperatur usw. eingehalten werden müssen, wird dieser Kernteil des Verfahrens vorzugsweise als sogenannten Batchbetrieb respektiv Chargenbetrieb durchgeführt. Damit können insbesondere für jedes Partikel des Nährsubstrates gleiche Bedingungen eingehalten werden, so dass auch das Endprodukt einen hohen Grad an Gleichmässigkeit besonders in bezug auf den Wassergehalt aufweist. Am Ende der ganzen Batchdauer kann das sterile Nährsubstrat ggf. das Brutmaterial über eine Abführleitung in einen Zwischenspeicher 35 abgefüllt werden.

In einem Untergeschoss befindet sich eine Abfüllanlage 57, in der das behandelte und frisch inoculierte Brutmaterial in Brutsäcke 50 abgefüllt wird. Die gängige Praxis bei der Herstellung von Pilzbrutmaterial geht so vor sich, dass in ein Nährsubstrat zum Beispiel in Form einer Masse von gereinigten, sterilen und gequollenen Roggenkörnern, eine kleine Menge mit Myzel bewachsenen Körner eingemischt wird. Nach dieser Impfung (Inoculierung) sind nach einer bestimmten Zeit, zum Beispiel nach 8 bis 24 Tagen, in Brutsäcken 50 oder Plastikcontainern alle Körner gleichmässig überwachsen und bereit, für das Einbringen in den Kompostnährboden eine Pilzzuchtanstalt. Damit nun aber bei der Abfüllung nicht Fremdkeime, wie Bakterien oder Pilzsporen in das Brutmaterial gelangen, wird der ganze Abfüllvorgang in einer Reinraumkabine 58 durchgeführt. Innerhalb der Reinraumkabine 58 kann im Nahbereich einer Sackfüllstation 59 eine innere sterile Zone 60 zum Beispiel durch die Einbringung von steriler Luft in der Klasse 100 (US.Fed.Std. 209 B) geschaffen werden (laminar Flow).

In dem Zwischenspeicher 35, der im wesentlichen die Form eines nach unten verjüngten Konus hat, ist am unteren Auslass ein von einer elektronischen Waage 61 steuerbares Dosiersystem 69 angeordnet, das bei schonender Behandlung genaue Portionen zum Beispiel von 2 bis 15 kg Brutmaterial in jeden einzelnen vorsterilisierten Plastiksack beziehungsweise Brutsack 50 abfüllt. Nach Erreichen eines vorgewählten Sackgewichtes wird der volle Sack direkt einer sich daneben befindlichen Schweissanlage 62 übergeben, die den Sack keimdicht verschweisst. Der Sack weist als Atmungsöffnung einen speziellen Filter auf. Der Brutsack 50 wird dann in einer Etikettieranlage 63 mit allen notwendigen Informationen gekennzeichnet und verlässt die Reinraumkabine 58. Der Brutsack 50 kann nun in normaler Umgebungsluft durch einen Manipulator 64 in spezielle Transport- und Reifepaletten 65 eingelegt, in ganzen Stapeln 66 aufgeschichtet und in einen Reiferaum 67 zur notwendigen Lagerung und anschliessend in einen Kühlraum zur längeren Haltung gebracht werden. Von hier erfolgt deren Ablieferung an die Pilzzüchter.

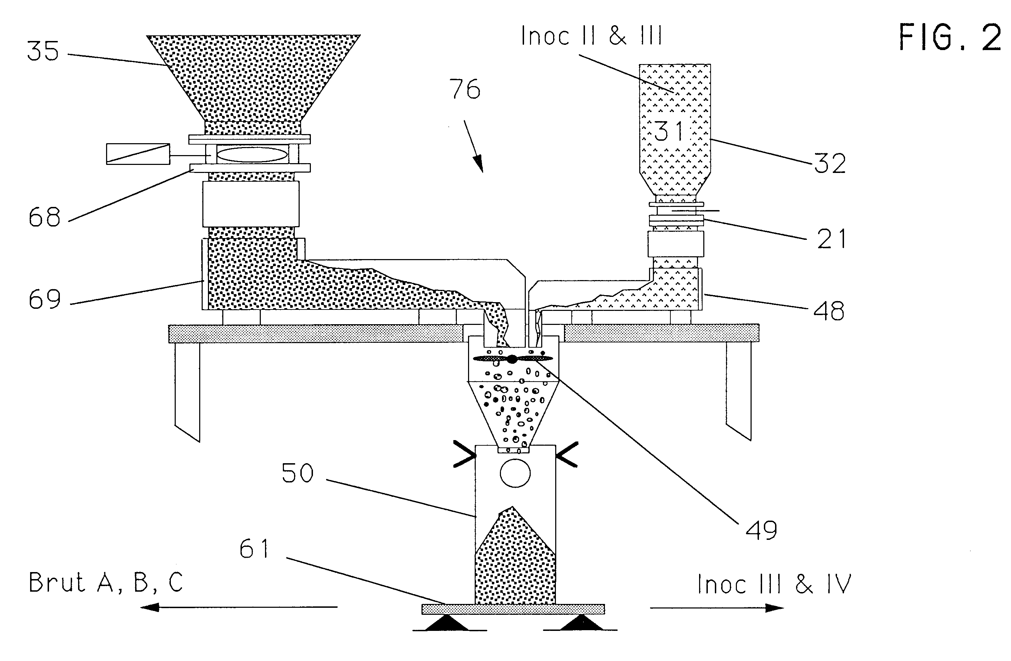

Das Anlagedetail A aus der Figur 1 zeigt gemäss Figur 2 einen erfindungswesentlichen Teil der Anlage und des Verfahrens. Sie dient erstens für die Herstellung von mittleren und kleinen Mengen von einzelnen Sorten von für den Handel bestimmten Brutsäcken, zweitens für die eigene Vermehrung von Inoculum 31. Einem zweiten Prozessraum 3' beziehungsweise kontinuierlich arbeitenden zweiten Kleinmengen-Misch- und Dosiergerät 76 wird von dem Zwischenpeicher 35 über eine Austragsklappe 68 und eine Dosierrinne 69 aufbereitetes Nährsubstrat zugeführt. Hierauf wird laborreines Impfmittel (Inoc II) oder davon abgeleitetes Impfmittel (Inoc III, IV) oder Impfmittel einer gewünschten Sorte zugeleitet und unter dessen Drehtellermischer 49, welcher Brutmaterial und Inoculum optimal vermischt, zur Absackung auf eine elektronische Waage 61 gegeben. Auf diese Weise kann aus reinem und teurem, im Labor gezüchteten Brutmaterial (Inoc II) durch Impfen von Nährsubstrat aus dem Zwischenbehälter 35 eine grössere Menge gleichwertigen Impfmittels (Inoc III) hergestellt beziehungsweise abgeleitet werden. In gleicher Weise kann dieses für die Produktion von Brutmaterial erstmals abgeleitete Impfmittel (Inoc III) mit dieser Einrichtung ein zweites Mal abgeleitet und zu einem gleichwertigen Impfmittel (Inoc IV) vermehrt werden. Weitere solche Ableitungen zur Vermehrung des Impfmittels sind nur mit Vorbehalten möglich. Durch die Zugabe von Impfmitteln eines anderen Kulturstammes ist es indessen möglich, andere Brutmaterialsorten in kleinen Mengen für den Handel bereit zu stellen.

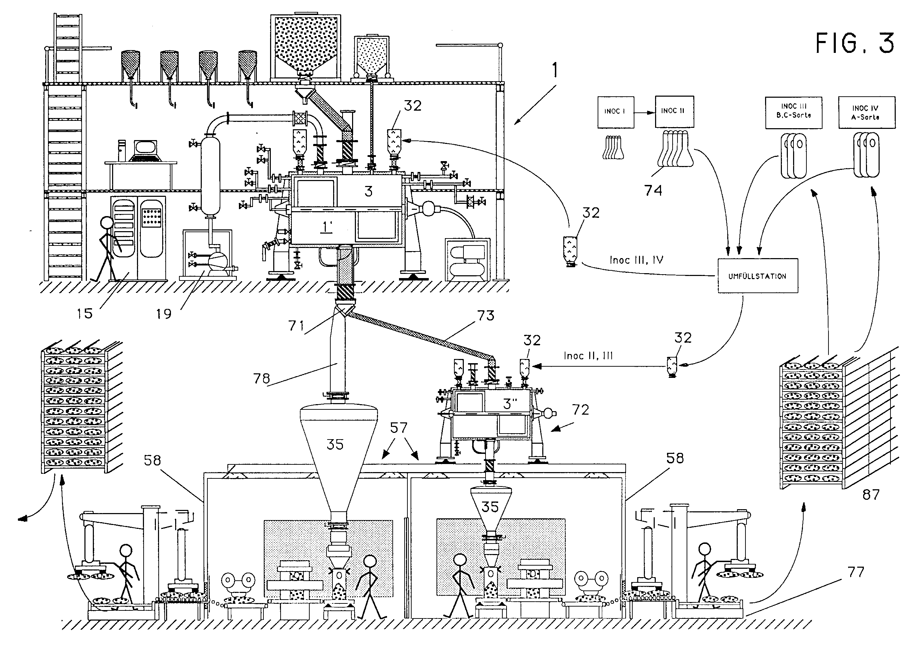

In der Figur 3 sind weitere Möglichkeiten des Verfahrens dargestellt, wobei der zweite Prozessraum 3'' beziehungsweise ein zweiter Mischer 72 als Batchmischer ausgebildet ist. Je nach Stellung einer Rohrweiche 71 kann entsprechend der Figur 1 Nährsubstrat über die Abführleitung 78 in den Zwischenspeicher 35 geleitet, oder über ein Abzweigrohr 73 in den zweiten Mischer 72 überführt werden. Hierbei kann der kontinuierlich arbeitende Kleinmengenmischer 76 der Figuren 1 und 2 entfallen.

Für den Bau von besonders grossen Anlagen oder solchen Anlagen mit denen in grösserer Regelmässigkeit wiederholt spezielles, nur aufgequollenes und steriles, Brutmaterial hergestellt werden muss, ist es vorteilhaft, zusätzlich die Möglichkeit zu schaffen, das Inoculum als Teil eines getrennten Prozesses herzustellen. Dadurch eröffnen sich verschiedene Betriebsweisen. So kann die Aufbereitung des Nährsubstrates (linke Bildhälfte der Figur 3) etwa gemäss der Figur 1 oder aber gemäss anderen Verfahren zum Beispiel gemäss der US-PS Nr. 2 932 862 erfolgen, welche das Aufquellen und Sterilisieren mit einschliessen.

Ferner ist es möglich, je nach spezifischen Anforderungen zusätzlich auch noch das Anbringen einer Haftsubstanz auf den Körnern des Brutmaterials und das Anbringen einer Puderschicht in dem ersten Prozessraum 3 vorzunehmen.

Aufgequollenes und steriles Nährsubstrat kann ferner mit einer optimalen Temperatur über das Abzugsrohr 73 in den zweiten Mischer 72 gegeben, wobei der Mischer zum Beispiel nur 10 % des Fassungsvermögens der Aufqell- und Sterilisiereinheit 1 aufweisen kann. Eine der Hauptanforderungen an den Mischer 72 ist ebenfalls eine völlige Sterilität, so dass auch hier wie bei der Aufquell- und Sterilisiereinheit alle notwendigen Reinigungsanschlüsse und Abläufe vorgesehen werden müssen. Der Mischer 72 kann mit einer thermischen Behandlung sowie mit Anschlüssen für das Anbringen einer Haftschicht und/oder einer Puderschicht konzipiert sein.

Aber auch hier ist es möglich, in den zweiten Mischer 72 nach Einbringen einer bestimmten Menge, sei es zum Beispiel 120 Liter sterilen Nährsubstrates von dem ersten Mischer 1', eine Inocmenge von zum Beispiel 3,3 Liter, welche in Inoc-Flaschen 74 (Inoc II) direkt von einem Brutlabor geliefert wurden, eingegeben und das Substrat gemischt und sofort in einen Inoc-Sack 77 abgefüllt und für die notwendige Wachstumszeit in ein Impfstofflager 87 gegeben werden. Ist das so gewonnene Nährsubstrat (Inoc III) in dem Inoc-Sack genügend durchwachsen, kann in dem zweiten Mischer 72 bei einem zweiten Durchgang bei entsprechendem Fassungsvermögen die 10-fache Mengen zum Beispiel 1200 Liter eingefüllt und Inoc IV hergestellt werden, dies zur Inoculierung in den ersten Prozessraum 3.

Die Lösung gemäss Figur 3 hat aber zusätzlich zwei weitere grosse Vorteile. Von einer grossen Menge zum Beispiel 3000 - 5000 kg Nährsubstrat in der Aufquell- und Sterilisiereinheit 1, können in dem zweiten Mischer 72 eine beliebig grosse Zahl Teilmengen verschiedener Inoc-Sorten hergestellt werden, was jedoch eine vollständige Reinigung des Mischers 72 nach jedem Sortenwechsel bedingt.

Es kann ferner von einer grossen Menge Nährsubstrat in der Aufquell- und Sterilisiereinheit 1 nur eine kleine Teilmenge vor dem Hinzufügen dem Inoc über das Abzweigrohr 73 entnommen und durch Einmischen einer speziellen Inoc-Sorte eine entsprechend kleine Menge, also zum Beispiel nur 1 Brutsack für einen kleinen Kunden oder für Versuche, hergestellt werden. Die Produktion des Nährsubstrates beziehungsweise dessen Vorbereitung ist damit optimal, ebenso die Inoculierung für kleinste Mengen, dies durch die Möglichkeit der Abtrennung beider Verfahrensschnitte.

Die Entscheidung, welche Ausführung der Kleinmengenbeziehungsweise Inoculum-Produktion gewählt wird (Ausführung gemäss Figur 2 oder kontinuierlich, gemäs Figur 3 batchweise) kann auf Grund des Produktionskonzeptes des Unternehmens (Mengen/Sortengerüst) getroffen werden, wobei die Ausführung gemäss Figur 2 wesentlich wirtschaftlicher in der Anschaffung ist.

## Patentansprüche

1. Verfahren zur Herstellung von Brutmaterial mit Zellkulturen in Reinkultur durch Inoculierung eines körnigen sterilen Nährsubstrates von 40 bis 60 % Wassergehalt mit einem Pilzmyzel,
**dadurch gekennzeichnet**,
dass die Inoculierung wählbar, entweder in einem ersten Prozessraum (3) oder in einem zweiten, über eine sterile Produktüberführung (78 resp. 73) verbindbaren vorzugsweise kleineren Prozessraum (3' resp. 3'') durchgeführt wird.

2. Verfahren nach Anspruch 1,
**dadurch gekennzeichnet**,
dass in dem zweiten, als Kleinmengen-Trockenmischer (76, 72) ausgebildeten Prozessraum (3' , 3'') vorzugsweise Teilmengen des Nährsubstrates aus dem ersten Prozessraum (3) im Durchlauf- oder Batchbetrieb inoculiert werden, zum Beispiel zur Herstellung von Kleinmengen beziehungsweise Kleinchargen.

3. Verfahren nach Anspruch 1 oder 2,
**dadurch gekennzeichnet**,
dass in dem zweiten Prozessraum (3', 3'') Inoculum für die Inoculierung des Nährsubstrates in dem ersten Prozessraum (3) hergestellt wird.

4. Verfahren nach Anspruch 3,
**dadurch gekennzeichnet**,
dass in dem zweiten Prozessraum (3', 3'') aus einer kleinen Impfmittel-Labormenge (Inoc II) (z.Bsp. 1 - 3 Liter) in einem ersten Durchgang ein Impfmittel (Inoc III) in grösserer Menge und aus dieser grösseren Menge Inoc III eine grosse Menge eines Impfmittels (Inoc IV) hergestellt werden.

5. Mischvorrichtung zur Herstellung von Brutmaterial nach einem der Ansprüche 1 bis 4,
**dadurch gekennzeichnet**,
dass er zwei, durch eine Produktüberführung (34 resp. 73), verbindbare Mischer (1',76 resp. 1',72) mit je einem unabhängigen Inoculum-Anschluss sowie Steuermittel (15) aufweist, zur wahlweisen Inoculierung in dem ersten Mischer (1') und/oder in dem zweiten Mischer (76 resp. 72).

6. Mischvorrichtung nach Anspruch 5,
**dadurch gekennzeichnet**,
dass zwischen den beiden Mischern (1', 76) ein Zwischenspeicher (35) angeordnet ist.

7. Mischvorrichtung nach Anspruch 6,
**dadurch gekennzeichnet**,
dass der erste Mischer (1') in Kombination mit einer Aufquell- und Sterilisiereinheit (1) verwendbar ist.

8. Mischvorrichtung nach Anspruch 5 bis 7,
**dadurch gekennzeichnet**,
dass der zweite Mischer (72) als Batchmischer ausgebildet ist, und vorzugsweise einen Doppelmantel für die Erwärmung und Kühlung sowie Anschlüsse für Haft- und/oder Wachstumsförderstoffe, wie Mischfettsäuren und Puder für das Beschichten des Nährsubstrates aufweist, wobei besonders vorzugsweise das Volumen des ersten Mischers (1') fünf bis zehn Mal grösser ist, als das Volumen des zweiten Mischers (72).

9. Mischvorrichtung nach Anspruch 5 bis 7,
**dadurch gekennzeichnet**,
dass der zweite Mischer (76) als kontinuierlichen Mischer ausgebildet ist und vorzugsweise Anschlüsse für die Zugabe eines Impfmittels aufweist, wobei besonders vorzugsweise das Volumen des ersten Mischers 50 bis 100 Mal grösser ist, als das Volumen des zweiten Mischers (76).

10. Mischvorrichtung nach Anspruch 5 bis 8,
**dadurch gekennzeichnet**,
dass der erste Mischer (1') und/oder zweite Mischer (72) auf Wägeelemente abgestützt ist/sind.

11. Mischvorrichtung nach Anspruch 5 bis 9,
**dadurch gekennzeichnet**,
dass der erste Mischer (1') und der zweite Mischer (72, 76) gemeinsam der gleichen oder zwei getrennten Abfülleinrichtungen zugeordnet sind.
